# FASCICULE DE BREVET EUROPEEN

(11) **EP 0 639 488 B1**
(45) Date de publication et mention de la délivrance du brevet: **26.03.1997**
(21) Numéro de dépôt: 94401775.5
(22) Date de dépôt: 02.08.1994
(51) Int. Cl.: B60T 3/00

(54) **Dispositif de calage d'un camion acculé à un quai de chargement**
Verkeileinrichtung für ein an eine Laderampe zurückgedrückten Lastkraftwagen
Locking device for a lorry reversed against a loading ramp

(30) Priorité: 16.08.1993 FR 9310008
(43) Date de publication de la demande: 22.02.1995
(73) Titulaire: Bras, Alvaro, F-60190 Epineuse (FR)
(72) Inventeur: Bras, Alvaro, F-60190 Epineuse (FR)
(74) Mandataire: CABINET BONNET-THIRION

(56) Documents cités:
- FR-A- 2 481 663
- FR-A- 2 689 845
- US-A- 4 207 019

## Description

L'invention se rapporte à un dispositif de calage des roues d'un véhicule utilitaire acculé à un quai.

Pour le chargement et le déchargement de véhicules utilitaires de façon pratique et rapide, il est classique d'amener le véhicule à reculer contre un quai, pour amener la porte arrière du véhicule au bord du quai, et d'opérer le chargement ou le déchargement du fret à l'aide de chariots à palettes. Comme le niveau du plancher des véhicules est susceptible de variations, tant d'un véhicule à l'autre que, pour un même véhicule, en fonction du poids de la charge, on dispose entre le plancher du véhicule et le quai des rampes ou passerelles sur lesquelles passent les chariots à palettes. Les chocs résultant de l'accostage et du franchissement de ces rampes ou passerelles par les chariots ont tendance à provoquer le déplacement du véhicule en éloignement du quai, et un risque d'échappement de la rampe et de perte d'équilibre des chariots ou de chute de personnel.

Le serrage des freins de parc de véhicules n'apporte pas la sécurité nécessaire, notamment parce que l'absence, l'insuffisance ou le relâchement du serrage de ces freins ne sont pas apparents. Il est donc impératif de disposer des cales en avant de roues du véhicule pour interdire qu'il s'écarte accidentellement du quai pendant le chargement. Normalement, ces roues sont celles d'un essieu arrière du véhicule, proche du quai.

On utilise couramment dans ce but des cales simples, en sabot, posées à la main. Toutefois l'usage de telles cales demande une grande vigilance au personnel d'encadrement, pour que le conducteur du véhicule mis à quai puisse trouver aisément les cales nécessaires, et les mettre en place correctement avant que commence le chargement ou le déchargement.

On a proposé des dispositifs motorisés pour mettre en place des cales contre les roues d'essieux arrière de véhicules utilitaires, tels que le calage soit commandé par une manoeuvre simple, tel que l'appui sur un bouton.

On observera que les dispositifs doivent réaliser des mouvements complexes, car, lors des manoeuvres d'accostage du quai par le véhicule, les cales ne doivent pas se trouver sur la trajectoire des roues, et doivent être éclipsées ou disposées à l'écart, pour venir en position de calage, contre les roues, et dans leur trace. Par ailleurs, les dispositifs sont, lors des manoeuvres des véhicules, exposés à se trouver dans les trajectoires de ces véhicules, et doivent donc être à la fois peu encombrants, robustes et rustiques.

A la connaissance du Demandeur, les dispositifs de calage proposés jusqu'ici se sont avérés insuffisamment robustes et rustiques, et inutilement coûteux.

Le document US-A-4 207 019 décrit un dispositif de calage de l'essieu arrière d'un véhicule utilitaire, prévu pour coopérer avec un tablier éclipsable équipant un quai de chargement. Le dispositif comporte, perpendiculairement au quai, un vérin couplé fonctionnellement à la commande hydraulique du tablier, et attelé, par l'intermédiaire de biellettes, à des bras porte-cale montés pivotants sur un chariot, capable de coulisser dans un guide en rapprochement du quai à l'encontre de moyens de ressort. En position de repos, les bras porte-cale sont étendus en prolongement du vérin dont la tige est sortie, avec les cales au plus loin du quai. La rétraction de la tige de vérin, dans un premier temps, déploie les bras en alignement transversal, les cales se plaçant en avant des roues arrière du véhicule, en décrivant un arc de cercle d'avant en arrière par rapport au véhicule. Dans un deuxième temps, la tête de tige de vérin portant sur une butée solidaire du chariot vient faire reculer celui-ci, en comprimant les moyens de ressort, en entraînant les bras et les cales jusqu'à ce que ces dernières portent contre les roues. On comprend que le calage cesse dès que la pression qui rétracte la tige du vérin est interrompue, les ressorts ramenant le chariot vers l'avant du véhicule.

L'invention a pour objectif, en conséquence, la réalisation d'un dispositif de calage simple, peu coûteux, robuste et rustique.

Dans ce but l'invention propose un dispositif pour le calage des roues d'un véhicule utilitaire en combinaison avec un quai contre lequel ce véhicule vient s'acculer pour lui interdire de s'écarter de ce quai pendant le chargement et le déchargement, et comportant à cet effet des cales de roue à l'extrémité de bras pivotants, caractérisé en ce qu'il comporte un organe de traction entraînable par moteur dans les deux sens le long d'une voie perpendiculaire au quai au-dessus de laquelle le véhicule vient se placer, un traîneau mobile suivant la voie avec une paire de bras montés à pivot sur le traîneau symétriquement par rapport à la voie, chacun s'étendant, de part et d'autre du pivot, d'une extrémité proximale à une extrémité distale, celle-ci portant une cale de roue, et capables d'un débattement angulaire horizontal autour de leur pivot entre une position d'attente où ils sont sensiblement parallèles à la voie avec leur extrémité distale vers le quai, et une position de calage où, portant contre des butées solidaires du traîneau, ils sont écartés en formant un angle inférieur à 180° avec les cales dans les traces des roues, les extrémités proximales étant attelées à l'organe de traction par des biellettes respectives convergeant vers le quai.

La disposition des bras et leur attelage à l'organe de traction, joints à la résistance au déplacement du traîneau sur la voie ont pour effet que, lorsque l'organe de traction est entraîné par le moteur en rapprochement du quai, les bras s'écartent jusqu'à porter sur leurs butées, ce qui place les cales dans les traces des roues, en avant de celles-ci; puis l'organe de traction, ne pouvant plus se déplacer par rapport au traîneau, entraîne celui-ci en direction du quai, jusqu'à engager les cales sous les roues du premier essieu rencontré du véhicule. L'entraînement de l'organe de traction en sens inverse (éloignement du quai) provoque simultanément un rapprochement des bras et un éloignement du traîneau tandis que les cales glissent latéralement l'une vers l'autre pour s'échapper des roues; puis les bras se referment jusqu'à être sensiblement parallèles, puis le traîneau s'éloigne du quai. On remarquera que le dispositif ne comporte aucune commande électrique à bord du traîneau, de sorte qu'il ne demande pas de câble de liaison électrique souple qui pourrait être endommagé par le passage des véhicules.

De préférence, le traîneau est équipé de verrous propres à bloquer les bras en position d'attente. En disposition préférée, le traîneau est équipé d'un cadre avec deux longerons coulissant parallèlement à leur voie et dépassant du traîneau pour être réunis par des traverses, des butoirs étant disposés, respectivement proche et éloigné du quai aux extrémités de la voie, respectivement à des positions de déverrouillage et de verrouillage, les verrous étant constitués en saillie sur les longerons en sorte de s'engager contre un bord interne de l'extrémité proximale des bras en position d'attente, le cadre étant amené en position de verrouillage.

Grâce à cette disposition, lorsque le traîneau est tiré par l'organe de traction au plus loin en éloignement du quai, avec les bras sensiblement parallèles en position d'attente, la traverse du cadre en avant dans ce mouvement vient porter sur le butoir éloigné du quai en position de verrouillage, ce qui amène les saillies des longerons à verrouiller les bras en position d'attente. Après quoi le traîneau peut être ramené jusqu'à proximité du quai, où la portée de la traverse de cadre sur le butoir proche du quai déverrouille les bras.

On comprend que, pour le calage du véhicule, l'éloignement du traîneau est arrêté avant la position extrême, pour que les bras puissent s'écarter et amener les cales sous les roues. Par contre, après l'enlèvement des cales, l'éloignement du traîneau va jusqu'au butoir de verrouillage.

Des caractéristiques complémentaires et des avantages de l'invention ressortiront d'ailleurs de la description qui va suivre, à titre d'exemple, en référence aux dessins annexés dans lesquels:
- la figure 1 est une représentation en perspective d'un dispositif de calage selon l'invention;
- la figure 2 est une élévation latérale schématique du dispositif de la figure 1, montrant les positions respectives des cales et des roues calées;
- les figures 3 à 7 sont des schémas illustrant les manoeuvres de calage et de libération des roues.

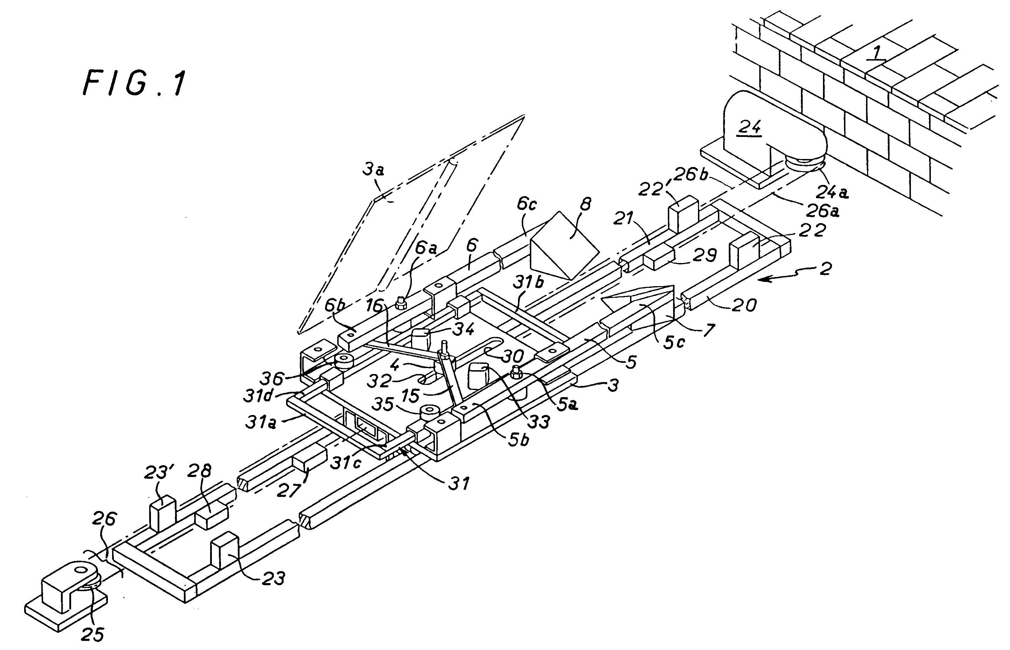

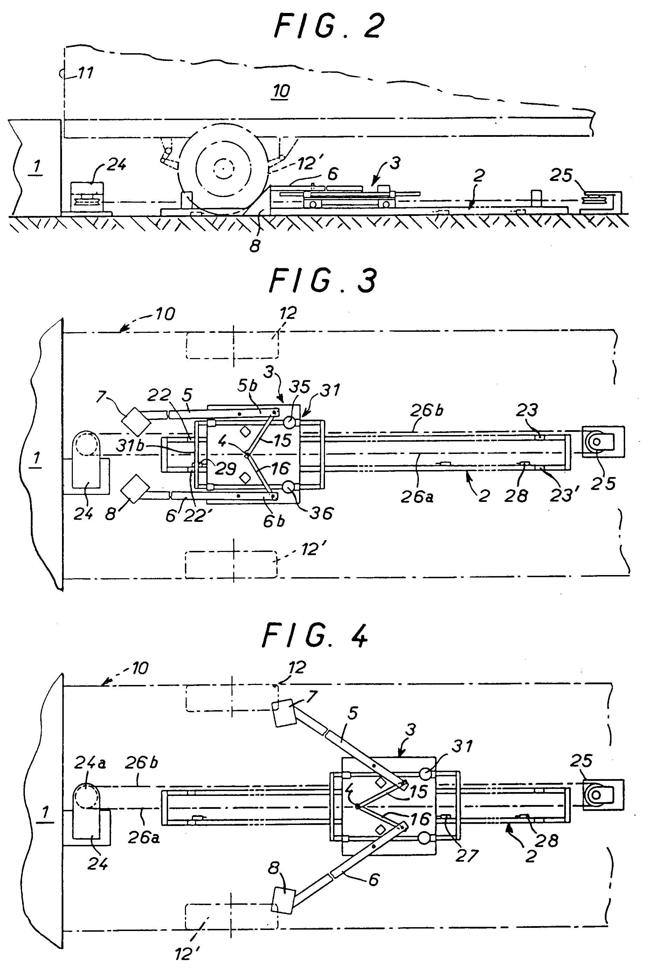

Selon le mode de réalisation de l'invention choisi et représenté aux figures 1 et 2, un dispositif pour le calage des roues d'un véhicule utilitaire ou camion 10, comporte une voie 2, constituée de deux profilés (tubes à section carrée) 20 et 21 parallèles étendus perpendiculairement à un quai 1 pour le chargement et le déchargement du camion 10, acculé au quai 1 au-dessus de la voie 2, et sensiblement centré par rapport à la voie 2. Les profilés 20 et 21 sont maintenus parallèles par des entretoises soudées, et sont ancrés dans le sol.

Sur la voie 2, un traîneau 3 dans son ensemble est mobile longitudinalement; il peut être entraîné par un lien en boucle, ici une chaîne calibrée 26 qui passe sur une poulie à empreinte 24a mue par un moteur à réducteur 24 situé entre le quai 1 et l'origine de la voie 2, et sur une poulie de renvoi 25, également à empreinte et située au-delà de l'extrémité de la voie 2 éloignée du quai. Les axes des poulies 24a et 25 sont verticaux de sorte que la chaîne 26 comporte deux brins approximativement dans un même plan horizontal, un brin 26a, qui sera dit brin tracteur disposé dans l'axe de la voie, et un brin de retour 26b décalé latéralement. Les extrémités de la chaîne 26 se rejoignent, sur le brin tracteur 26a par fixation en alignement parallèle à la voie, sur un organe de traction 4, capable de coulisser dans une lumière longitudinale 30 pratiquée dans le traîneau 3.

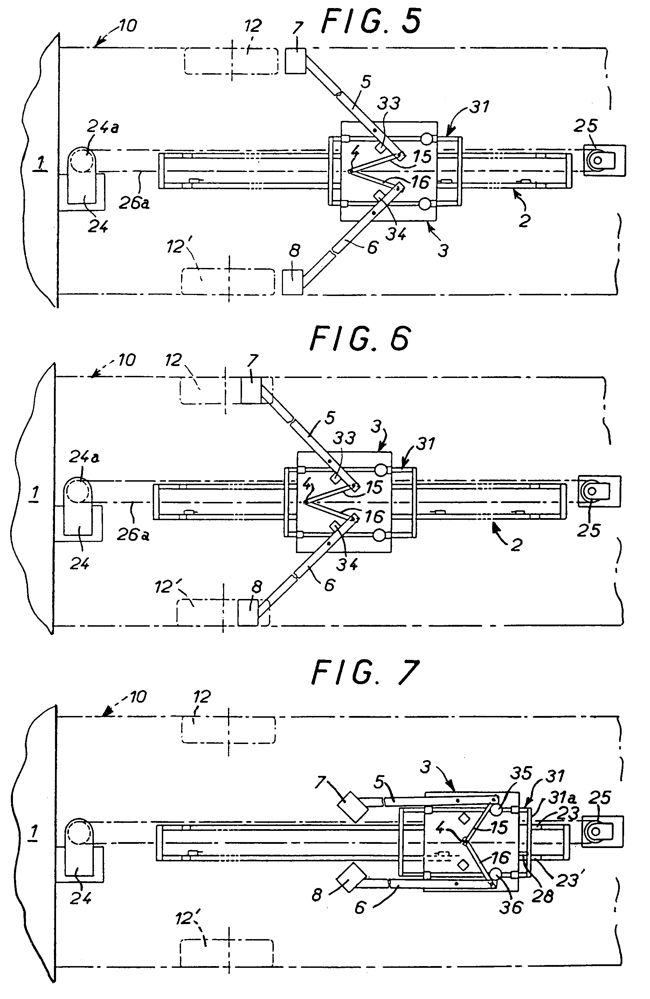

Sur le traîneau 3 est montée symétriquement une paire de bras 5, 6, sur des pivots 5a, 6a respectifs. Les pivots 5a, 6a sont disposés, sur chaque bras, entre une extrémité proximale 5b, 6b, et une extrémité distale 5c, 6c où sont fixées des cales 7, 8. Sur les extrémités proximales 5b, 6b sont articulées des biellettes respectivement 15, 16 qui sont attelées sur l'organe de traction 4. Ainsi, les bras 5, 6 possèdent un débattement angulaire, déterminé par la position relative de l'organe de traction 4 dans la lumière 30 du traîneau 3, depuis une position d'attente (figure 3) où les bras 5 et 6 sont sensiblement parallèles à la voie avec les extrémités distales vers le quai, l'organe de traction 4 venant alors en butée sur l'extrémité 32 de la lumière 30 éloignée du quai 1 (on notera que sur la figure 1, l'organe d'attelage 4 n'est pas représenté en butée sur l'extrémité 32 de la lumière 30, pour la clarté de la figure). Le débattement angulaire des bras 5, 6 est limité en écartement dans une position de calage (figure 6), où ils portent contre des butées respectives 33, 34, en formant un angle entre eux, voisin ici de 90°, et de toute manière nécessairement inférieur à 180°; dans cette position de calage, les cales 7, 8 se trouvent dans les traces des roues 12, 12'. On appelle traces des roues les pistes au sol décrites par les roues du véhicule 10 reculant contre le quai 1, pour son chargement ou son déchargement par l'ouverture de son arrière 11. On notera que les butées 33, 34 sont disposées pour porter sur les bras 5, 6 entre les pivots 5a, 6a et les extrémités proximales 5b, 6b.

On aura compris que la sollicitation de l'organe de traction 4 par le brin de traction 26a de la chaîne 26 en direction du quai 1 tend à déployer les bras 5, 6 et que la sollicitation en direction de la poulie de renvoi 25 tend à les ramener en position d'attente.

Sur le traîneau 3 est monté un cadre de verrou 31, constitué de deux longerons 31a, 31d coulissant longitudinalement un peu à l'intérieur des bras 5, 6 en position d'attente parallèle, dépassant du traîneau 3 à ses deux extrémités, et réunis par des traverses 31a du côté éloigné du quai 1, et 31b du côté proche du quai.

Aux extrémités de la voie 2 sont disposés des butoirs 22, 22' du côté du quai, et 23, 23' du côté éloigné du quai contre lesquels viennent buter en fin de course du traîneau, les traverses 31b et 31a respectivement.

Sur les longerons 31c, 31d sont montés des galets de verrou respectivement 35 et 36 qui, lorsque les bras 5, 6 sont en position d'attente, viennent s'insérer par butée de la traverse 31a sur le butoir 23, 23', entre les bords internes des extrémités proximales 5b, 6b des bras 5, 6, qui sont alors verrouillés en position d'attente, et ne peuvent s'ouvrir lorsque l'organe d'attelage est tiré vers le quai.

On comprend que, lorsque la traverse 31a vient porter contre le butoir 23, 23', le cadre 31 est mis en position de verrouillage, et que, lorsque la traverse 31b vient porter sur le butoir 22, 22', le cadre 31 est en position de déverrouillage.

Les manoeuvres de calage et de libération du véhicule utilitaire vont être décrites maintenant en référence aux figures 3 à 7.

A l'origine (figure 3), le traîneau 3 se trouve au plus près du quai 1, avec les bras 5, 6 en position d'attente parallèles à la voie 2, la traverse arrière 31b du cadre 31 en appui sur le butoir arrière 22, et, en conséquence, les galets de verrou 35, 36 dégagés des extrémités proximales 5b, 6b des bras 5, 6.

Le véhicule 10 vient alors s'acculer au quai 1, avec son axe longitudinal parallèle à l'axe de la voie 2 et à la verticale de celui-ci, de façon aussi précise que possible, de façon que les roues 12, 12' de l'essieu arrière soient symétriques par rapport à l'axe de la voie 2.

Le moteur 24 est alors alimenté, pour tourner dans le sens qui provoque l'avance du traîneau 3 en s'écartant du quai 1, jusqu'à atteindre un contact de fin de course 27, situé sur la voie 2 proche de l'extrémité éloignée du quai, mais toutefois encore écarté du butoir 23. Pendant cette phase, l'organe de traction 4 est en appui sur l'extrémité 32 de la lumière 30 (figure 1), de sorte que les bras 5, 6 restent parallèles en position d'attente. La manoeuvre du contact fin de course 27 provoque l'inversion du moteur 24, qui maintenant tire, par l'intermédiaire du brin de traction 26a, l'organe de traction 4 vers le quai 1. En raison de la résistance au déplacement du traîneau 3 sur la voie 2, l'organe de traction 4 coulisse par rapport au traîneau, en provoquant l'écartement des bras 5, 6 (figure 4).

Lorsque (figure 5) les bras 5, 6, sollicités par les biellettes 15, 16 attelées à l'organe de traction 4 viennent en appui sur les butées 33, 34, et qu'ainsi les cales 7, 8 sont disposées dans les traces des roues 12, 12', le traîneau 3 est rapproché du quai 1 jusqu'à ce que les cales 7, 8 soient engagées sous les roues 12, 12'. Le blocage du moteur 24 provoque la coupure de son alimentation (figure 6).

Lorsque le véhicule 10 doit quitter le quai 1, le moteur est réalimenté pour tourner dans le sens qui éloigne le traîneau 3 du quai 1. La sollicitation de l'organe de traction 4 par la chaîne 26 provoque simultanément un mouvement du traîneau 3 et un resserrement des bras 5, 6, pour faire glisser les cales 7, 8 parallèlement au quai jusqu'à dégager les roues 12, 12'; puis les bras 5, 6 sont amenés en position d'attente, parallèles à la voie 2, à la suite de quoi le traîneau 3 est tiré jusqu'à l'extrémité éloignée du quai 1 de la voie 2, où le butoir 23 met le cadre 31 en position de verrouillage (figure 7). Simultanément, le traîneau 3 manoeuvre un contact fin de course 28, qui inverse le sens de rotation du moteur 24, de sorte que le traîneau 3 est ramené vers l'extrémité de la voie 2 proche du quai 1. La portée de la traverse 31b du cadre 31 sur le butoir 23, 23' met ce cadre 31 en position déverrouillée, tandis que la manoeuvre d'un contact fin de course 29 arrête le moteur 24. On retrouve alors l'état d'origine correspondant à la figure 3.

Les circuits électriques de commande du dispositif sont simples et à la portée de l'homme du métier; aussi ne seront-il pas décrits plus avant.

Bien entendu, l'invention n'est pas limitée à l'exemple décrit, et en embrasse toutes les variantes d'exécution dans le cadre des revendications.

## Revendications

1. Dispositif pour le calage des roues (12, 12') d'un véhicule utilitaire (10) en combinaison avec un quai (1) contre lequel ce véhicule vient s'acculer, pour lui interdire de s'écarter de ce quai pendant le chargement et le déchargement, et comportant à cet effet des cales de roue (7, 8) à l'extrémité de bras (5, 6) pivotants, caractérisé en ce qu'il comporte un organe de traction (4) entraînable par moteur (24) dans les deux sens le long d'une voie (2) perpendiculaire au quai (1), au-dessus de laquelle le véhicule (10) vient se placer, un traîneau mobile (3) suivant la voie (2) avec une paire de bras (5, 6) montés à pivot (5a, 6a) sur le traîneau (3) symétriquement par rapport à la voie (2), chacun s'étendant, de part et d'autre du pivot (5a, 6a), d'une extrémité proximale (5b, 6b) à une extrémité distale (5c, 6c), celle-ci portant une cale de roue (7, 8), et capables d'un débattement angulaire horizontal autour de leur pivot (5a, 6a) entre une position d'attente où ils sont sensiblement parallèles à la voie avec leur extrémité distale (5c, 6c) vers le quai (1), et une position de calage où, portant contre des butées (33, 34) solidaires du traîneau (3), ils sont écartés en formant un angle inférieur à 180° avec les cales dans les traces des roues (12, 12'), les extrémités proximales (5b, 5c) étant attelées à l'organe de traction (4) par des biellettes (15, 16) respectives convergeant vers le quai (1).

2. Dispositif selon la revendication 1, caractérisé en ce que l'organe de traction (4) est monté coulissant sur le traîneau (3) parallèlement à la voie, avec une course (30) limitée au moins en correspondance (32) avec la position d'attente des bras (5, 6).

3. Dispositif selon l'une des revendications 1 et 2, caractérisé en ce que le traîneau (3) est équipé de verrous (35, 36) propres à bloquer les bras (5, 6) en position d'attente.

4. Dispositif selon la revendication 3, caractérisé en ce que le traîneau (3) est équipé d'un cadre (31) avec deux longerons (31c, 31d) coulissant parallèlement à la voie (2) et dépassant du traîneau (3) pour être réunis par des traverses (31a, 31b), des butoirs étant disposés respectivement proche et éloigné du quai (1) aux extrémités de la voie (2) et amener le cadre (31), en fin de mouvement du traîneau (3), respectivement à des positions de déverrouillage et de verrouillage, les verrous (35, 36) étant constitués en saillie sur les longerons (31c, 31d) en sorte de s'engager chacun contre un bord interne de l'extrémité proximale (5a, 6a) des bras (5, 6) en position d'attente, le cadre (31) étant amené en position de verrouillage.

5. Dispositif selon l'une quelconque des revendications 1 à 4, caractérisé en ce que la voie (2) comporte un lien en boucle (26) passant, aux extrémités de la voie (2), sur deux roues (24a, 25) de renvoi, dont l'une (24a) proche du quai, est couplée au moteur (24) d'organe de traction (4), le lien ayant deux extrémités fixées sur l'organe de traction (4), en alignement parallèle à la voie (2).

6. Dispositif selon la revendication 5, caractérisé en ce que le lien (26) est une chaîne calibrée, et les roues de renvoi (24a, 25) sont des poulies à empreintes.

7. Dispositif selon l'une des revendications 5 et 6, caractérisé en ce que les roues de renvoi (24a, 25) sont disposées parallèlement au sol, avec leur axe vertical.

8. Dispositif selon une quelconque des revendications 5 à 7, caractérisé en ce que le lien formant deux brins, un brin de retour (26b) et un brin tracteur (26a), celui-ci est disposé dans l'axe de la voie (2) près du sol.

## Claims

1. Apparatus for blocking the wheels (12, 12') of a commercial vehicle (10) in combination with a dock platform (1) against which the vehicle is backed, to prevent it from moving away from said dock platform during loading and unloading, and comprising for that purpose wheel chocks (7, 8) at the end of pivoting arms (5, 6), characterised in that it comprises a traction member (4) drivable by a motor (24) in the two directions along a path (2) perpendicular to the dock platform (1), above which path the vehicle (10) is positioned, a sled (3) movable along the path (2) with a pair of arms (5, 6) mounted pivotably (5a, 6a) on the sled (3) symmetrically with respect to the path (2), each extending on respective sides of the pivot (5a, 6a) from a proximal end (5b, 6b) to a distal end (5c, 6c), the latter bearing a wheel chock (7, 8), and the arms being capable of a horizontal angular movement about their pivot (5a, 6a) between a waiting position in which they are substantially parallel to the path with their distal end (5c, 6c) towards the dock platform (1), and a blocking position in which, bearing against abutments (33, 34) which are fixed with respect to the sled (3), they are moved apart forming an angle of less than 180° with the chocks in the tracks of the wheels (12, 12'), the proximal ends (5b, 5c) being coupled to the traction member (4) by respective links (15, 16) which are convergent towards the dock platform (1).

2. Apparatus according to claim 1 characterised in that the traction member (4) is mounted slidably on the sled (3) parallel to the path, with a travel (30) which is limited at least in correspondence (32) with the waiting position of the arms (5, 6).

3. Apparatus according to one of claims 1 and 2 characterised in that the sled (3) is fitted with locks (35, 36) for blocking the arms (5, 6) in the waiting position.

4. Apparatus according to claim 3 characterised in that the sled (3) is provided with a frame (31) with two longitudinal members (31c, 31d) slidable parallel to the path (2) and projecting beyond the sled (3) to be connected by transverse members (31a, 31b), buffers being disposed respectively close to and remote from the dock platform (1) at the ends of the path (2) and capable of moving the frame (31), at the end of the movement of the sled (3), respectively to unlocking and locking positions, the locks (35, 36) being formed in projecting relationship on the longitudinal members (31c, 31d) in such a way as each to engage against an inside edge of the proximal end (5a, 6a) of the arms (5, 6) in the waiting position, the frame (31) being moved into the locking position.

5. Apparatus according to any one of claims 1 to 4 characterised in that the path (2) comprises a tie (26) in loop form which at the ends of the path (2) passes around two return wheels (24a, 25) of which the wheel (24a) which is close to the dock platform is coupled to the motor (24) of the traction member (4), the tie having two ends fixed to the traction member (4), in parallel alignment with respect to the path (2).

6. Apparatus according to claim 5 characterised in that the tie (26) is a calibrated chain and the return wheels (24a, 25) are pulleys with recesses therein.

7. Apparatus according to one of claims 5 and 6 characterised in that the return wheels (24a, 25) are disposed parallel to the ground, with their axis vertical.

8. Apparatus according to any one of claims 5 to 7 characterised in that the tie forming two runs, a return run (26b) and a traction run (26a), the latter is disposed on the axis of the path (2) close to the ground.

## Patentansprüche

1. Vorrichtung zum Verkeilen der Räder (12, 12') eines Nutzfahrzeugs (10) in Kombination mit einer Rampe (1), an die dieses Fahrzeug rückwärts herangefahren ist, um zu verhindern, daß es sich von dieser Rampe während des Ladens und Entladen entfernt, und umfassend zu diesem Zweck Radkeile (7, 8) am Ende von schwenkbaren Armen (5, 6), dadurch gekennzeichnet, daß sie ein Zugorgan (4) aufweist, das durch einen Motor (24) in den beiden Richtungen längs eines zur Rampe (1) senkrechten Gleises (2) antreibbar ist, über welchem das Fahrzeug (10) abgestellt ist, sowie einen auf dem Gleis (2) beweglichen Schlitten (3) mit einem Paar von Armen (5, 6), die auf dem Schlitten (3) auf Drehachse (5a, 6a) symmetrisch bezüglich des Gleises (2) montiert sind, deren jeder sich zu beiden Seiten der Drehachse (5a, 6a) von einem inneren Ende (5b, 6b) zu einem einen Radkeil (7, 8) tragenden äußeren Ende (5c, 6c) erstreckt und die zu einem horizontalen Winkelausschlag um ihre Drehachse (5a, 6a) zwischen einer Wartestellung, in der sie mit ihrem äußeren Ende (5c,6c) auf die Rampe (1) zu zum Gleis im wesentlichen parallel sind, und einer Verkeilungsstellung fähig sind, in der sie an mit dem Schlitten (3) fest verbundenen Anschlägen (33, 34) anliegen und unter Bildung eines Winkels von weniger als 180° und mit den Keilen in den Spuren der Räder (12, 12') gespreizt sind, wobei die inneren Enden (5b, 5c) jeweils über auf die Rampe (1) zu konvergierende Schwingarme (15, 16) mit dem Zugorgan (4) gekoppelt sind.

2. Vorrichtung nach Anspruch 1, dadurch gekennzeichnet, daß das Zugorgan (4) auf dem Schlitten (3) parallel zum Gleis auf einem Weg (30) beweglich montiert ist, der mindestens in Entsprechung (32) mit der Wartestellung der Arme (5, 6) begrenzt ist.

3. Vorrichtung nach einem der Ansprüche 1 und 2, dadurch gekennzeichnet, daß der Schlitten (3) mit Riegeln (35, 36) ausgerüstet ist, die geeignet sind, die Arme (5, 6) in Wartestellung zu blockieren.

4. Vorrichtung nach Anspruch 3, dadurch gekennzeichnet, daß der Schlitten (3) mit einem Rahmen (31) mit zwei Längsträgern (31c, 31d) ausgerüstet ist, die parallel zum Gleis (2) gleiten und am Schlitten (3) vorstehen, um durch Querträger (31a, 31b) verbunden zu sein, wobei Anschläge nahe der Rampe (1) bzw. entfernt von ihr an den Enden des Gleises (2) angeordnet sind und den Rahmen (31) am Ende der Bewegung des Schlittens (3) in Entriegelungsstellung bzw. Verriegelungsstellung bringen, wobei die Riegel (35, 36) als Vorsprung auf den Längsträgern (31c, 31d) gebildet sind, so daß jeder an einem inneren Rand des inneren Endes (5a, 6a) der Arme (5, 6) in Wartestellung eingreift, wobei der Rahmen (31) in die verriegelte Stellung gebracht ist.

5. Vorrichtung nach einem der Ansprüche 1 bis 4, dadurch gekennzeichnet, daß das Gleis (2) ein Verbindungsorgan in einer Schleife (26) besitzt, das an den Enden des Gleises (2) über zwei Umlenkräder (24a, 25) läuft, von denen das eine (24a), das der Rampe nahe ist, mit dem Motor (24) des Zugorgans (4) gekoppelt ist, wobei das Verbindungsorgan zwei an dem Zugorgan (4) befestigte Enden in paralleler Ausrichtung zum Gleis (2) hat.

6. Vorrichtung nach Anspruch 5, dadurch gekennzeichnet, daß das Verbindungsorgan (26) eine kalibrierte Kette ist und die Umlenkräder (24a, 25) Scheiben mit Vertiefungen sind.

7. Vorrichtung nach einem der Ansprüche 5 und 6, dadurch gekennzeichnet, daß die Umlenkräder (24a, 25) parallel zum Boden mit ihrer Achse vertikal angeordnet sind.

8. Vorrichtung nach einem der Ansprüche 5 bis 7, dadurch gekennzeichnet, daß das Verbindungsorgan zwei Trumme bildet, ein zurücklaufendes Trumm (26b) und ein Zugtrumm (267a), wobei dieses in der Achse des Gleises (2) in Nähe des Bodens angeordnet ist.
